# EUROPEAN PATENT SPECIFICATION

(11) **EP 2 132 028 B1**
(45) Date of publication and mention of the grant of the patent: **11.05.2011**
(21) Application number: 08723837.4
(22) Date of filing: 29.02.2008
(51) Int. Cl.: B29D 30/46, B26D 1/00

(54) **CUTTING DEVICE**
SCHNEIDEGERÄT
DISPOSITIF DE COUPE

(30) Priority: 01.03.2007 NL 1033473
(43) Date of publication of application: 16.12.2009
(73) Proprietor: VMI Holland B.V., 8161 RK Epe (NL)
(72) Inventor: KAAGMAN, Mattheus, Jacobus, NL-7328 HX Apeldoorn (NL)
(74) Representative: Bras, Pieter
(86) International application number: PCT/NL2008/000065
(87) International publication number: WO 2008/105655

(56) References cited:
- EP-A1- 0 324 199
- EP-A1- 0 649 730
- DE-A1- 2 638 884
- DE-A1- 2 805 870
- GB-A- 2 071 062
- US-A- 2 873 802
- US-A1- 2005 076 758

## Description

### BACKGROUND OF THE INVENTION

The present invention relates to a cutting device for cutting a rubber component for a green belt according to the preamble of claim 1.

Such a cutting device is known for instance from the European patent application EP 0 324 199.

### SUMMARY OF THE INVENTION

It is an object of the present invention among other things to provide an alternative cutting device for cutting a rubber component for a green belt that is relatively simple in construction.

To this end the present device provides a cutting device for cutting a rubber component for a green belt with the features as described in claim 1. Particular embodiments of the invention are defined in the dependent claims. Because the lifting beam extends transverse to the direction of conveyance between two conveyor rollers, no rollers with different lengths are required for forming the conveyor, in comparison with an inclined undercut ledge that is known per se. Because of this the construction of the roller conveyor, and consequently the cutting device, can remain relatively simple. Here in an advantageous manner, the knife is arranged so as to be displaceable along a guide rail with respect to the roller conveyor, wherein the angle that the knife forms with the direction of conveyance is adjustable in a range of approximately 18° to approximately 34°.

In an embodiment the lifting beam is vertically movable from a position under the plane of the roller conveyor to a position above the plane of the roller conveyor, because of which the lifting beam does not form a threshold for the rubber component to be conveyed because of which possible stagnation of the transport of the rubber component is further reduced.

In order to let the knife simply and quickly pass the lifting beam, according to an embodiment of a cutting device according to the invention in the centre of the lifting beam a gap is provided that is inclined with respect to the longitudinal direction of the lifting beam. Here it is advantageous when the gap has a width such that it permits the passage of a knife that is movable at an angle between approximately 18° and approximately 34° with respect to the direction of conveyance.

In an embodiment of a cutting device according to the invention in which the roller conveyor comprises two opposite sides, wherein the cutting device at the one side, seen in the direction of conveyance of the rubber component, comprises in front of and at the other side behind the knife pressure rollers for holding the rubber component pressed onto the roller conveyor, wherein the pressure rollers extend along less than half the width of the roller conveyor, it is ensured that when cutting the rubber component, when the lifting beam is in a position above the plane of the roller conveyor, the rubber component is held in its position. Because the pressure rollers extend along only a part of the width of the roller conveyor it is also ensured that an approximately diamond-shaped part of the rubber component is lifted from the roller conveyor when the lifting beam has been brought in a position above the plane of the roller conveyor. Because of this the cutting operation is enhanced. It is particularly advantageous then when the pressure rollers are arranged at a few millimetres above the roller conveyor.

An improved cutting operation is realised in an embodiment of a cutting device according to the invention when the knife can be heated.

In a structurally simple cutting device according to the invention the knife is movable at a fixed height above the roller conveyor.

Although the lifting beam can extend over a part of the width of the roller conveyor, it is advantageous when the lifting beam extends over the entire width of the roller conveyor. Because of this rubber components with various widths can be correctly cut by the cutting device.

In an embodiment of a cutting device according to the invention the knife has a symmetrical configuration. Because of this it is possible that upon movement in one direction the knife cuts the rubber component from the centre of the rubber component to a first side of the rubber component, and upon movement in the opposite direction it cuts the rubber component from the centre to the opposite second side of the rubber component. Here it is advantageous when the knife is provided with means for lifting and/or supporting the rubber component.

In order to convey the rubber component correctly positioned to under the knife, in an embodiment of a cutting device according to the invention along one side, upstream of the knife and along the opposite side, downstream of the knife, side guide rollers for the rubber component are arranged. Here it is in particular advantageous when the conveyor rollers at the location of the side guide rollers are arranged upstream and downstream at an angle of approximately 1° from a pure transverse direction, in a steering manner for moving the rubber component toward the respective side guide rollers.

In one embodiment of a cutting device according to the invention the central axis of the material coincides with the gap in the lifting beam when the inclined position of the conveyor rollers is point-symmetrical with respect to the gap in the lifting beam. Because of this the cutting operation is enhanced.

In order to convey the rubber component in a correct manner sufficient friction is required between the rubber component and the conveyor rollers. This friction is realised in an embodiment of a cutting device according to the invention in that the conveyor rollers comprise magnet rollers. In particular the magnet rollers are made of aluminium tubes which are rotatable about a fixed metal shaft, wherein a series of magnets is placed on the metal shaft. A structurally simple cutting device is obtained when on the fixed shaft two positioning sleeves are placed, that extend partially around the fixed shaft and at their ends comprise a recess through which a magnet is positioned. Here the positioning sleeves are secured onto the fixed shaft with adjustment screws.

The aspects and features as described in this description and/or shown in the drawings of this application can when possible also be applied individually. Those individual aspects, such as the lifting beam that extends transverse to the roller conveyor, the side guide rollers that are arranged at only one side of the roller conveyor, the steering arrangement of the conveyor rollers, the magnets in the conveyor rollers, and other aspects can be the subject of divisional patent applications directed thereto. This holds true in particular for the features and aspects that are described as such in the sub-claims.

### SHORT DESCRIPTION OF THE DRAWINGS

The invention will be elucidated on the basis of a number of exemplary embodiments as shown in the attached drawings, in which:
figure 1 is a schematic top view of a cutting device for cutting a rubber component according to an embodiment of the present invention without rubber component;
figure 2A is a schematic top view of a cutting device for cutting a rubber component according to an embodiment of the present invention with a rubber component placed on it;
figure 2B is a schematic side view of figure 2A;
figure 3A is a schematic top view of a cutting device for cutting a rubber component according to an embodiment of the present invention with a rubber component placed on it, that is partially lifted by a lifting beam;
figures 3B up to and including 3F are a schematic side view of figure 3A in various stages of cutting the rubber component by a knife;

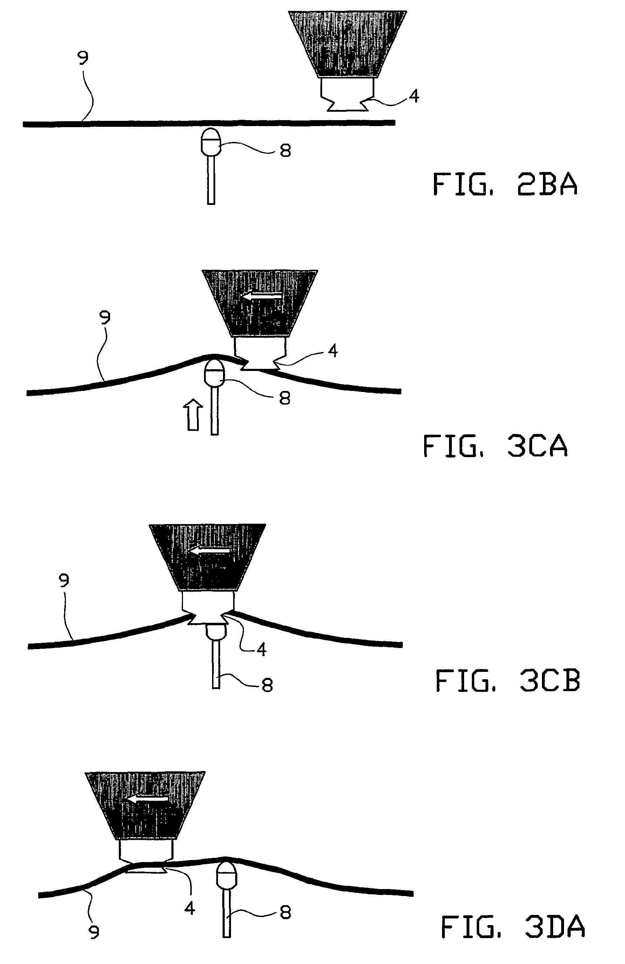

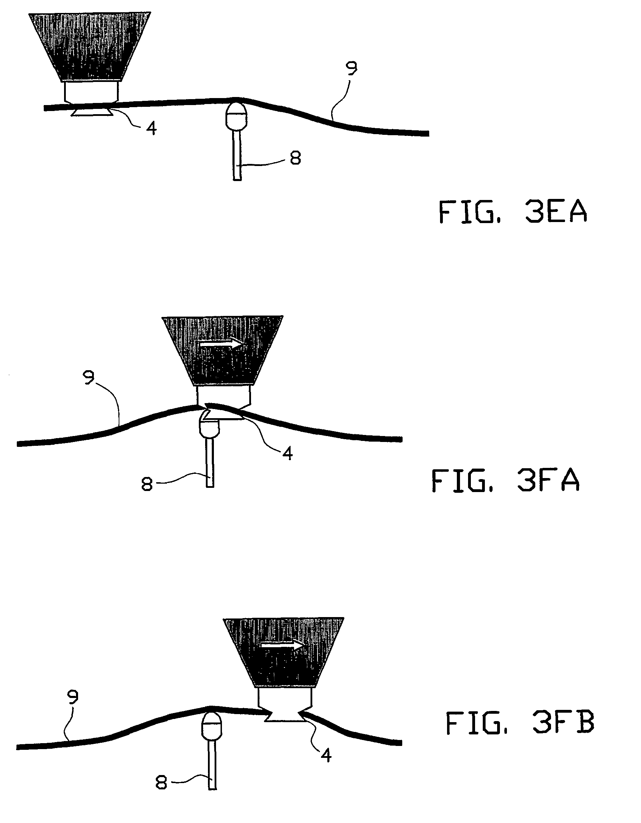

figures 2BA, 3CA, 3CB, 3DA, 3EA, 3FA and 3FB are a schematic, highly simplified, enlarged side view of the knife, the lifting beam and the rubber component in various stages of cutting the rubber component;

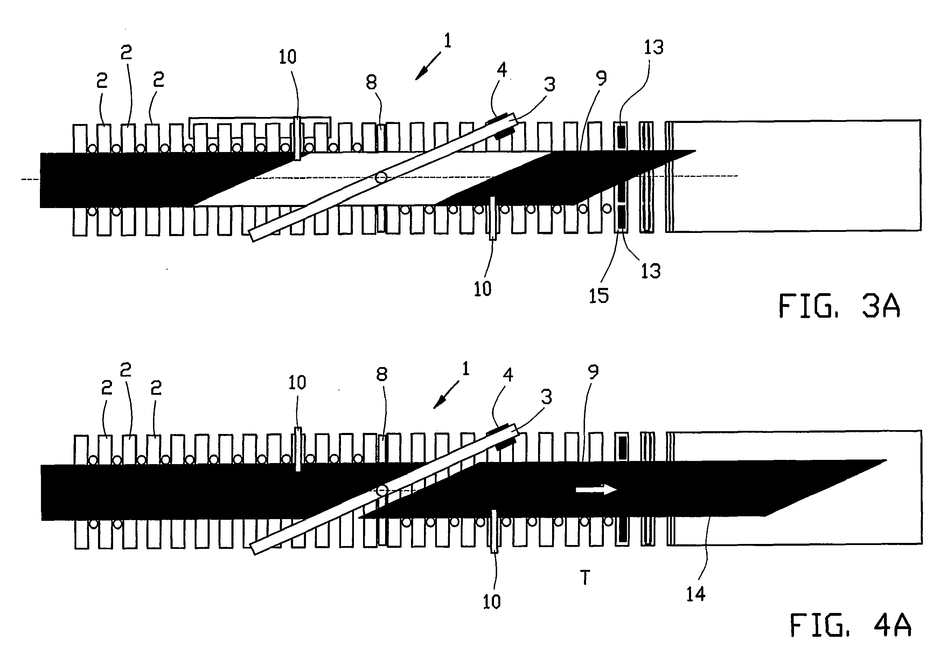

figure 4A is a schematic top view of a cutting device for cutting a rubber component according to an embodiment of the present invention wherein readily cut rubber component is being discharged;

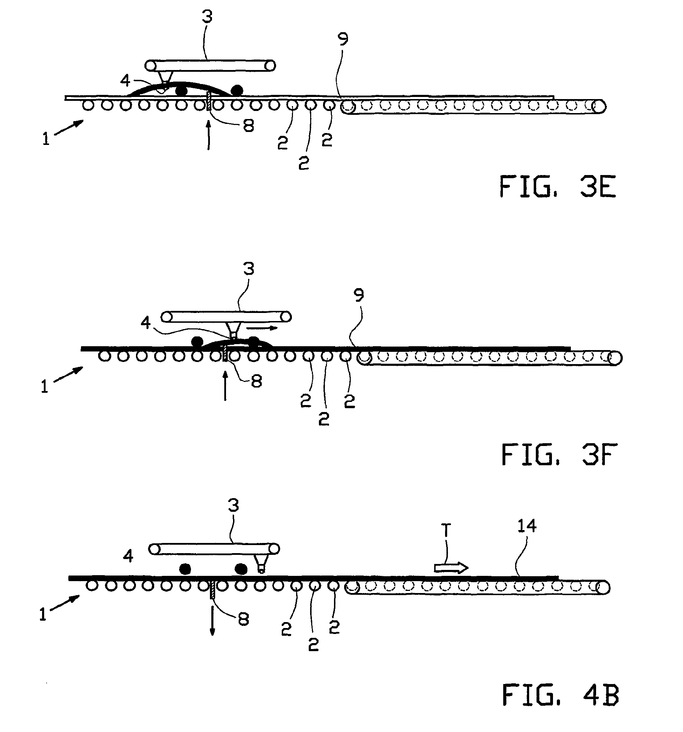

figure 4B is a schematic side view of figure 4A; and

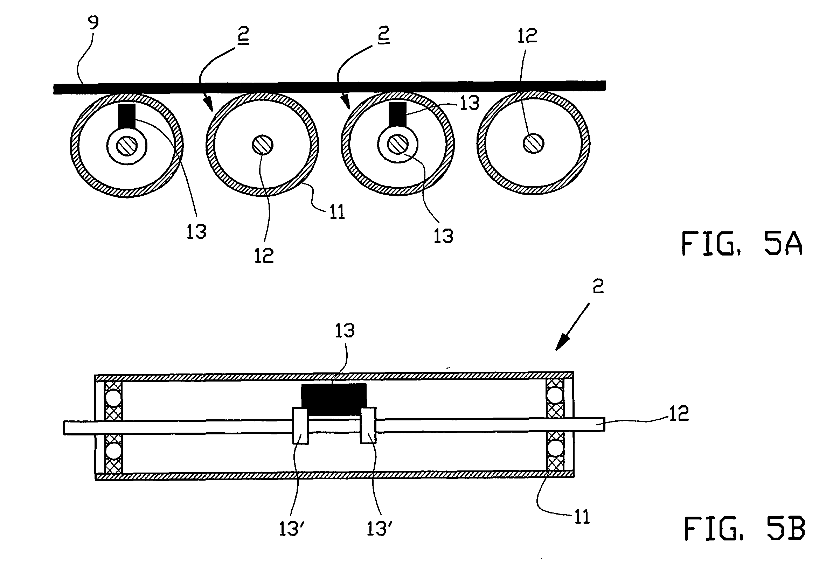

figures 5A and 5B are a schematic side view, a front view respectively, in cross-section of a part of the conveyor rollers of a cutting device according to an embodiment of the invention, showing the magnets in the conveyor rollers.

### DETAILED DESCRIPTION OF THE DRAWINGS

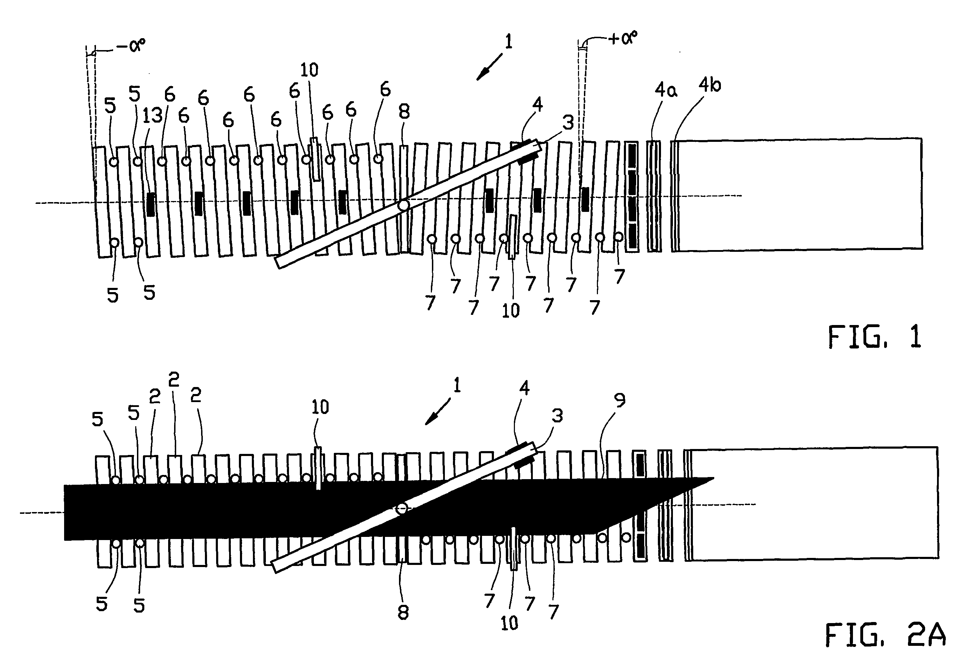

In fig. 1 is schematically depicted a top view of a cutting device for cutting a rubber component for a green belt.

The cutting device comprises a roller conveyor 1 for conveying a rubber component in a direction of conveyance (T: figures 4A and 4B). Such a rubber component may for instance be supplied from a (not depicted) supply reel.

The roller conveyor 1 is provided with a plurality of conveyor rollers 2, located substantially parallel to and at a distance from each other (vide for instance figure 2A). The cutting device is furthermore provided with a knife 4, arranged on a knife guide 3, for cutting the rubber component at an angle with the direction of conveyance T. For cutting the rubber component the knife 4 is arranged in a displaceable manner that is known per se, with respect to the roller conveyor 1 along a guide rail. Here the angle that the knife 4 forms with the direction of conveyance T is adjustable dependent upon the eventually required shape of the cut rubber component, in a range of approximately 18° to approximately 34°.

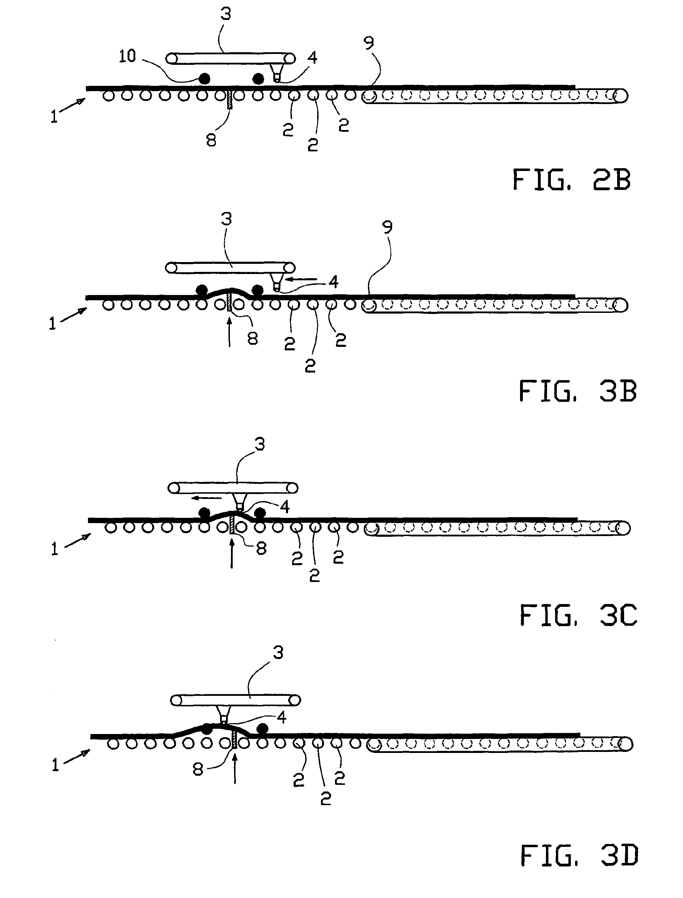

Although this is not depicted in the figures, the knife 4 can be heated, for instance to a temperature of at least approximately 120°C, so that the rubber component can be cut through more easily. In the embodiment as depicted in the figures, the knife guide 3 is arranged and embodied such that the knife 4 is movable at a fixed height above the roller conveyor 1. It will be evident however, that in other embodiments the knife 4 can be arranged in a height-adjustable manner. Because, as will be further elucidated hereinafter on the basis of figure 3, the knife 4 cuts the rubber component during the movement of the knife 4 in two opposite directions, the knife 4 has a symmetrical shape. In embodiments in which the knife 4 cuts the rubber component upon a movement in only one direction, the knife 4 may of course be embodied in a different way.

At a relatively large distance upstream of the knife 4 side guide rollers 5 are arranged at either side for conveying centred on the roller conveyor a not yet cut rubber component. At a shorter distance upstream of the knife side guide rollers 6 are arranged at only one side. Downstream of the knife 4 side guide rollers 7 for the rubber component are arranged along the opposite side. At the location of the side guide rollers 6, 7 the conveyor rollers 2 are arranged, upstream and downstream at an angle of α° (of for instance 1° or another suitable relatively small angle), from a pure lateral direction, in a steering manner for moving the rubber component to the respective side guide rollers 6, 7. I.e. the central axis of the conveyor rollers 2 forms an angle of approximately α° with the normal in the direction of conveyance T. This is only depicted in figure 1 for the simplicity of the drawings.

The cutting device is furthermore provided with a lifting beam 8 that extends transverse to the direction of conveyance T between two conveyor rollers 2. The lifting beam 8 is vertically movable by means of a (not depicted) lifting device that is known per se, for lifting the rubber component. As will be elucidated hereinafter on the basis of figures 3 and 4, the lifting beam 8 is vertically movable from a position under the plane of the roller conveyor 1 to a position above the plane of the roller conveyor 1. In the embodiment as depicted in the figures the lifting beam 8 extends over the entire width of the roller conveyor 1, although in other embodiments of the invention the lifting beam may extend over a smaller width.

In the centre of the lifting beam 8 a gap is arranged, that is inclined with respect to the longitudinal direction of the lifting beam 2, so that upon a movement of the knife 4 with a lifted lifting beam 8 the knife 4 can pass the lifting beam 8. The gap has such a width that it allows the passage of a knife 4 that is movable at an angle between approximately 18° and approximately 34° with respect to the direction of conveyance T. In the depicted embodiment the above described inclined position of the conveyor rollers 2 (for the purpose of steering the rubber component toward the side guide rollers 6, 7) is point-symmetrical with respect to the gap in the lifting beam 8.

In figures 2A and 2B is schematically depicted the situation in which a not yet cut rubber component 9 has been conveyed under and beyond the lifting beam 8 and the knife guide 3. For clarity's sake the knife 4, the lifting beam 8 and the rubber component 9 are depicted in this position in an enlarged manner in a highly simplified representation in figure 2BA. Here the lifting beam 8 is located under the plane of the roller conveyor 1. In order to be able to convey the rubber component 9 correctly on the roller conveyor 1 and to hold it in position, pressure rollers 10 are arranged, seen in the direction of conveyance of the rubber component, in front of and at the other side behind the knife, to hold the rubber component 9 pressed onto the roller conveyor. The pressure rollers 10 extend along less than half the width of the roller conveyor 1, and preferably, seen in projection, they are located within the range of movement of the knife 4. The pressure rollers 10 are arranged at a few millimetres above the roller conveyor 1, and preferably at an equal distance from the knife guide.

For the purpose of improving the friction between the conveyor rollers 2 and the rubber component 9 at least some of the conveyor rollers 2 are so-called magnet rollers (vide also figures 5A and 5B). Said magnet rollers are made of aluminium tubes 11 which are rotatable about a fixed metal shaft 12. On the metal shaft 12 is placed a series of (for instance permanent) magnets 13. Securing the magnets onto the shaft can be performed in any way that is known per se. An embodiment of such a fastening, in which mounting rings 13' are used, is depicted in figures 5A and 5B. On the fixed shaft 12 two (not depicted) positioning sleeves are placed, that extend partially around the fixed shaft 12. The positioning sleeves are secured with (not depicted) adjustment screws onto the fixed shaft 12. In this way the metal tubes 11 can be rotated for conveying the rubber component, wherein the magnets 13 pull the magnetic cords or wires, present in the rubber component, against the tubes 11 for realising the required friction. As depicted in the figures in this embodiment magnet rollers are alternated with conveyor rollers without magnets. The shaft 12 is mounted in a fixed position in the frame of the cutting device, wherein the magnets 13 are mounted on top of the shaft, i.e. are in a 12 o'clock position. This can be realised by shaping the fixed shaft and the mounting gap for it such that it can be mounted in one position only.

In figure 3A is shown schematically in top view and in figure 3B is shown in side view the situation in which the not yet cut rubber component 8 is partially lifted by moving the lifting beam 8 vertically upward. As a consequence of the pressure rollers 10 an almost diamond-shaped part of the rubber component 9 is lifted from the roller conveyor 1, as indicated by the light-dashed zone in figure 3A. As depicted in figure 3C the knife 4 is then moved over the knife guide such that the knife 4 contacts the rubber component 9 at the location of the gap in the lifting beam 8 and thus cuts it upon further continuous movement (figure 3D). For clarity's sake the knife 4, the lifting beam 8 and the rubber component 9 are depicted in this position in an enlarged manner in a highly simplified representation in figures 3CA, 3CB and 3DA. The knife 4 is provided with means, for instance a suitably shaped collar, for lifting or bearing the rubber component, so that cutting of the rubber component can take place from the centre to an edge of it, without additional means. In the situation as depicted in figure 3E (for clarity's sake the knife 4, the lifting beam 8 and the rubber component 9 are depicted in this position in an enlarged manner in a highly simplified representation in figure 3EA) the knife 4 has cut one half of the rubber component 9, which half is then located on the roller conveyor, and the direction of movement of the knife 4 is reversed, so that the knife can cut through from the centre of the rubber component 9 from the rubber component 9 up to the other edge (figures 3F, 3FA and 3FB). When this half of he rubber component 9 has been cut through as well, the cut rubber component 14 can be discharged for further processing (figures 4A and 4B). In order to maintain a position of the cut rubber component 14 on the roller conveyor one conveyor roller 15 (or possibly various conveyor rollers) can be provided with a plurality of adjacent magnets 13.

It is noted that by the combined action, i.e. the mutual positioning of the lifting beam and the pressure rollers, the knife, upon movement, engages the rubber component exactly in the centre.

The above description is included to illustrate the operation of embodiments of the invention and not to limit the scope of the invention. Starting from the above explanation many variations that fall within the scope of the present invention will be evident to an expert, in particular as defined in the accompanying claims.

## Claims

1. Cutting device for cutting a rubber component (9) for a green belt, wherein the cutting device comprises a roller conveyors (1) for conveying the rubber component in a direction of conveyance, said roller conveyor comprising a number of conveyor rollers (2) which are substantially parallel to and spaced apart from each other, wherein the cutting device comprises a knife (4) for cutting the rubber component at an angle with the direction of conveyance, wherein the cutting device is provided with a lifting beam (8) that extends transverse to the direction of conveyance between two conveyor rollers, said lifting beam (8) being vertically movable for lifting the rubber component, wherein the knife is arranged so as to be displaceable along a guide rail with respect to the roller conveyor, **characterised in that** the angle that the knife (4) forms with the direction of conveyance is adjustable in a range of approximately 18 ° to approximately 34°.

2. Cutting device according to claim 1, wherein the lifting beam is vertically movable from a position under the plane of the roller conveyor to a position above the plane of the roller conveyor.

3. Cutting device according to claim 1 or 2, wherein in the centre of the lifting beam a gap is provided that is inclined with respect to the longitudinal direction of the lifting beam.

4. Cutting device according to claim 2 or 3, wherein the gap has a width such that it permits the passage of a knife that is movable at an angle between approximately 18° and approximately 34° with respect to the direction of conveyance.

5. Cutting device according to any one of the preceding claims, wherein the roller conveyor comprises two opposite sides, wherein the cutting device at the one side, seen in the direction of conveyance of the rubber component, comprises in front of and at the other side behind the knife pressure rollers for holding the rubber component pressed onto the roller conveyor, wherein the pressure rollers extend along less than half the width of the roller conveyor.

6. Cutting device according to claim 5, wherein the pressure rollers are arranged at a few millimetres above the roller conveyor.

7. Cutting device according to any one of the preceding claims, wherein the knife can be heated.

8. Cutting device according to any one of the preceding claims, wherein the knife is movable at a fixed height above the roller conveyor.

9. Cutting device according to any one of the preceding claims, wherein the lifting beam extends over the entire width of the roller conveyor.

10. Cutting device according to any one of the preceding claims, wherein the knife has a symmetrical configuration.

11. Cutting device according to any one of the preceding claims, wherein along one side, upstream of the knife and along the opposite side, downstream of the knife, side guide rollers for the rubber component are arranged.

12. Cutting device according to any one of the preceding claims, wherein the conveyor rollers at the location of the side guide rollers are arranged upstream and downstream at an angle of approximately 1° from a pure transverse direction, in a steering manner for moving the rubber component toward the respective side guide rollers.

13. Cutting device according to claims 4 and 12, wherein the inclined position of the conveyor rollers is point-symmetrical with respect to the gap in the lifting beam.

14. Cutting device according to any one of the preceding claims, wherein the conveyor rollers comprise magnet rollers.

15. Cutting device according to claim 14, wherein the magnet rollers are made of aluminium tubes which are rotatable about a fixed metal shaft, wherein a series of magnets is placed on the metal shaft.

## Patentansprüche

1. Schneidegerät zum Schneiden eines Gummibauteils (9) für einen Grüngürtel, wobei das Schneidegerät eine Rollentransporteinrichtung (1) zum Transport des Gummibauteils in einer Transportrichtung umfasst, wobei die Rollentransporteinrichtung eine Anzahl von Transportrollen (2) aufweist, die im Wesentlichen parallel zueinander und voneinander beabstandet sind, wobei das Schneidegerät ein Messer (4) zum Schneiden des Gummibauteils in einem Winkel zu der Transportrichtung umfasst, wobei das Schneidegerät mit einem Hebebalken (8) versehen ist, welcher sich quer zu der Transportrichtung zwischen zwei Transportrollen erstreckt, wobei der Hebebalken (8) zum Anheben des Gummibauteils vertikal beweglich ist, wobei das Messer so angeordnet ist, dass es entlang einer Führungsschiene mit Bezug auf die Rollentransporteinrichtung verstellbar ist, **dadurch gekennzeichnet, dass** der Winkel, welchen das Messer (4) mit der Transportrichtung bildet, in einem Bereich von annähernd 18° bis annähernd 34° einstellbar ist.

2. Schneidegerät nach Anspruch 1, wobei der Hebebalken von einer Position unter der Ebene der Rollentransporteinrichtung in eine Position über der Ebene der Rollentransporteinrichtung vertikal beweglich ist.

3. Schneidegerät nach Anspruch 1 oder 2, wobei in der Mitte des Hebebalkens eine Lücke vorgesehen ist, welche mit Bezug auf die Längsrichtung des Hebebalkens schräg ist.

4. Schneidegerät nach Anspruch 2 oder 3, wobei die Lücke eine solche Breite aufweist, dass sie den Durchgang eines Messers gestattet, welches in einem Winkel zwischen annähernd 18° und annähernd 34° in Bezug auf die Transportrichtung beweglich ist.

5. Schneidegerät nach einem der vorhergehenden Ansprüche, wobei die Rollentransporteinrichtung zwei gegenüberliegende Seiten aufweist, wobei das Schneidegerät gesehen in der Transportrichtung des Gummibauteils auf der einen Seite vor und auf der anderen Seite hinter dem Messer Druckrollen zum Halten des Gummibauteils gepresst auf die Rollentransporteinrichtung aufweist, wobei sich die Druckrollen entlang weniger als die halbe Breite der Rollentransporteinrichtung erstrecken.

6. Schneidegerät nach Anspruch 5, wobei die Druckrollen wenige Millimeter über der Rollentransporteinrichtung angeordnet sind.

7. Schneidegerät nach einem der vorhergehenden Ansprüche, wobei das Messer heizbar ausgebildet ist.

8. Schneidegerät nach einem der vorhergehenden Ansprüche, wobei das Messer in einer festen Höhe über der Rollentransporteinrichtung beweglich ist.

9. Schneidegerät nach einem der vorhergehenden Ansprüche, wobei sich der Hebebalken über die gesamte Breite der Rollentransporteinrichtung erstreckt.

10. Schneidegerät nach einem der vorhergehenden Ansprüche, wobei das Messer eine symmetrische Konfiguration aufweist.

11. Schneidegerät nach einem der vorhergehenden Ansprüche, wobei entlang einer Seite in Transportrichtung vor dem Messer und entlang der gegenüberliegenden Seite in Transportrichtung hinter dem Messer Seitenführungsrollen für das Gummibauteil angeordnet sind.

12. Schneidegerät nach einem der vorhergehenden Ansprüche, wobei die Transportrollen in dem Bereich der Seitenführungsrollen in Transportrichtung davor und in Transportrichtung dahinter in einem Winkel von ungefähr 1° von einer reinen Querrichtung in einer Lenkungsweise angeordnet sind, um das Gummibauteil zu den jeweiligen Seitenführungsrollen zu bewegen.

13. Schneidegerät nach Anspruch 4 und 12, wobei die schräge Position der Transportrollen punktsymmetrisch in Bezug auf die Lücke in dem Hebebalken ausgebildet ist.

14. Schneidegerät nach einem der vorhergehenden Ansprüche, wobei die Transportrollen magnetische Rollen aufweisen.

15. Schneidegerät nach Anspruch 14, wobei die magnetischen Rollen aus Aluminiumrohren hergestellt sind, welche um eine feste Metallwelle drehbar sind, wobei eine Reihe von Magneten auf der Metallwelle angeordnet ist.

## Revendications

1. Dispositif de coupe pour couper un composant en caoutchouc (9) pour une ceinture verte, le dispositif de coupe comprenant un transporteur à rouleaux (1) pour convoyer le composant en caoutchouc dans une direction de convoiement, le transporteur à rouleaux comprenant un certain nombre de rouleaux de convoyage (2) qui sont sensiblement parallèles entre eux et espacés, le dispositif de coupe comprenant un couteau (4) pour couper le composant en caoutchouc avec un angle par rapport à la direction de convoyage, le dispositif de coupe étant muni d'une barre de levage (8) qui s'étend en transversalement par rapport à la direction de convoyage entre deux rouleaux de convoyage, la barre de levage (8) étant mobile verticalement pour soulever le composant en caoutchouc, le couteau étant agencé de façon à pouvoir être déplacé le long d'un rail de guidage par rapport au transporteur à rouleaux, **caractérisé en ce que** l'angle que le couteau (4) forme avec la direction de convoyage est ajustable dans une plage d'environ 18° à environ 34°.

2. Dispositif de coupe selon la revendication 1, dans lequel la barre de levage est mobile verticalement d'une position située en dessous du plan du transporteur à rouleaux vers une position situé au-dessus du plan du transporteur à rouleaux.

3. Dispositif de coupe selon la revendication 1 ou 2, dans lequel au centre de la barre de levage est prévu un intervalle qui est incliné par rapport à la direction longitudinale de la barre de levage.

4. Dispositif de coupe selon la revendication 2 ou 3, dans lequel l'intervalle a une largeur qui permet le passage d'un couteau qui est mobile selon un angle compris entre environ 18° et environ 34° par rapport à la direction de convoyage.

5. Dispositif de coupe selon l'une quelconque des revendications précédentes, dans lequel le transporteur à rouleaux comprend deux côtés opposés, dans lequel le dispositif de coupe d'un côté, vu dans la direction de convoyage du composant en caoutchouc, comprend devant et de l'autre côté derrière le couteau, des rouleaux de pression pour maintenir le composant en caoutchouc pressé sur le transporteur à rouleaux, les rouleaux de pression s'étendant le long de moins de la moitié de la largeur du transporteur à rouleaux.

6. Dispositif de coupe selon la revendication 5, dans lequel les rouleaux de pression sont agencés quelques millimètres au-dessus du transporteur à rouleaux.

7. Dispositif de coupe selon l'une quelconque des revendications précédentes, dans lequel le couteau peut être chauffé.

8. Dispositif de coupe selon l'une quelconque des revendications précédentes, dans lequel le couteau est mobile à une hauteur fixe au-dessus du transporteur à rouleaux.

9. Dispositif de coupe selon l'une quelconque des revendications précédentes, dans lequel la barre de levage s'étend sur toute la largeur du transporteur à rouleaux.

10. Dispositif de coupe selon l'une quelconque des revendications précédentes, dans lequel le couteau a un agencement symétrique.

11. Dispositif de coupe selon l'une quelconque des revendications précédentes, dans lequel le long d'un côté, en amont du couteau et le long du côté opposé, en aval du couteau, sont agencés des rouleaux de guidage latéral pour le composant en caoutchouc.

12. Dispositif de coupe selon l'une quelconque des revendications précédentes, dans lequel les rouleaux de convoyage situés à l'emplacement des rouleaux de guidage latéral sont agencés en amont et en aval avec un angle d'environ 1° par rapport à une direction purement transversale, dans un but de conduite pour déplacer le composant en caoutchouc en direction des rouleaux de guidage latéral respectifs.

13. Dispositif de coupe selon les revendications 4 et 12, dans lequel la position inclinée des rouleaux de convoyage a une symétrie de point par rapport à l'intervalle dans la barre de levage.

14. Dispositif de coupe selon l'une quelconque des revendications précédentes, dans lequel les rouleaux de convoyage comprennent des rouleaux à aimants.

15. Dispositif de coupe selon la revendication 14, dans lequel les rouleaux à aimants sont faits de tubes d'aluminium qui peuvent tourner autour d'un arbre métallique fixe, une série d'aimants étant placée sur l'arbre métallique.
